(19) Europäisches Patentamt
European Patent Office
Office européen des brevets

(11) **EP 2 345 117 B1**

(12) **FASCICULE DE BREVET EUROPEEN**

(45) Date de publication et mention de la délivrance du brevet:
**23.11.2016 Bulletin 2016/47**

(21) Numéro de dépôt: **09756038.7**

(22) Date de dépôt: **15.10.2009**

(51) Int Cl.:
***H01S 3/0941*** (2006.01)

(86) Numéro de dépôt international:
**PCT/FR2009/051973**

(87) Numéro de publication internationale:
**WO 2010/043822 (22.04.2010 Gazette 2010/16)**

(54) **SYSTEME AMPLIFICATEUR OPTIQUE POUR LASER IMPULSIONNEL A BASE D'UN MILIEU A GAIN GUIDANT ET LASER IMPULSIONNEL LE COMPRENANT**

**OPTISCHES VERSTÄRKERSYSTEM FÜR GEPULSTEN LASER AUF DER BASIS EINES FÜHRENDEN VERSTÄRKUNGSMEDIUMS UND GEPULSTER LASER DAMIT**

**OPTICAL AMPLIFIER SYSTEM FOR PULSED LASER BASED ON A GUIDING GAIN MEDIUM AND PULSED LASER COMPRISING SAME**

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **16.10.2008 FR 0857040**

(43) Date de publication de la demande:
**20.07.2011 Bulletin 2011/29**

(73) Titulaires:
• **Fibercryst**
 **69616 Villeurbanne (FR)**
• **Centre National de la Recherche Scientifique**
 **75794 Paris Cedex 16 (FR)**
• **L'Université Claude Bernard Lyon 1**
 **69622 Villeurbanne (FR)**

(72) Inventeurs:
• **BALEMBOIS, François Daniel**
 **F-91870 Boissy Le Sec (FR)**
• **GEORGES, Patrick Marcel**
 **F-78590 Noisy Le Roi (FR)**
• **SANGLA, Damien**
 **F-33800 Bordeaux (FR)**
• **DIDIERJEAN, Julien**
 **F-69300 Caluire (FR)**

(74) Mandataire: **Michelet, Alain et al**
**Cabinet HARLE et PHELIP**
**14-16, rue Ballu**
**75009 Paris (FR)**

(56) Documents cités:
**EP-A- 1 703 601       EP-A- 1 911 967**
**WO-A-2006/106276     WO-A-2007/051138**

• **DIGONNET M J F ET AL: "CLAD ND: YAG FIBERS FOR LASER APPLICATIONS" JOURNAL OF LIGHTWAVE TECHNOLOGY, IEEE SERVICE CENTER, NEW YORK, NY, US, vol. LT-05, no. 5, 1 janvier 1987 (1987-01-01), pages 642-646, XP000915539 ISSN: 0733-8724**
• **DIGONNET M J F ET AL: "1.064- AND 1.32-MUM ND:YAG SINGLE CRYSTAL FIBER LASERS" JOURNAL OF LIGHTWAVE TECHNOLOGY, IEEE SERVICE CENTER, NEW YORK, NY, US, vol. LT-04, no. 4, 1 avril 1986 (1986-04-01), pages 454-460, XP000711116 ISSN: 0733-8724**

EP 2 345 117 B1

## Description

L'invention concerne un amplificateur optique pour laser impulsionnel à impulsions courtes (de durée inférieure à 10 nanosecondes) ou ultra-courtes (de durée inférieure à 1 picoseconde) et énergétiques (d'énergie supérieure à 10 microJoules par impulsion).

Un laser à impulsions associe généralement un oscillateur et un système amplificateur pour générer des impulsions à la fois courtes et énergétiques. L'oscillateur génère des impulsions d'une durée allant de la femtoseconde à plusieurs dizaines de nanosecondes et de bonne qualité spatiale mais dont l'énergie est généralement limitée (de quelques nanojoules à quelques millijoules). Pour augmenter l'énergie délivrée par un oscillateur, il est nécessaire d'utiliser un système amplificateur capable à la fois d'augmenter fortement la puissance de sortie et d'extraire l'énergie avec le meilleur rendement possible. Ces deux fonctions nécessaires à un bon amplificateur sont, dans la plupart des cas, antagonistes car il est difficile d'obtenir à la fois un très fort gain et une excellente extraction d'énergie du fait des phénomènes de saturation du gain avec la puissance incidente.

Le paramètre clé d'un système amplificateur est le facteur d'amplification appelé également gain. Le gain est donné par la formule suivante :

$$G_{eff} = e^{\int_0^{l_c} g(z).dz}$$

où $l_c$ est la longueur totale du milieu à gain et $g$ le gain linéique en m$^{-1}$, à la longueur d'onde laser. Le gain linéique $g_l$ dépend du gain linéique « petit signal » $g_0$ et du rapport de l'intensité laser à amplifier $I_{signal}$ sur l'intensité de saturation $I_{sat}$ par la formule suivante :

$$g_l \propto \frac{g_0}{1 + \dfrac{I_{signal}}{I_{sat}}}$$

La dépendance du gain avec l'intensité laser incidente est donc une information fondamentale pour la réalisation et l'utilisation d'un système amplificateur, car elle détermine le potentiel d'un système amplificateur pour une utilisation comme préamplificateur ou comme amplificateur de puissance en fin de chaîne. Nous nous intéressons également à la puissance moyenne obtenue en sortie de l'amplificateur, qui est un paramètre limitant dans certains systèmes, et au rendement d'un amplificateur.

Le rendement est le rapport entre la puissance de sortie et la puissance de pompe.

Une première solution pour optimiser le gain et le rendement d'amplification consiste à mettre en oeuvre plusieurs amplificateurs en série pour associer des milieux de caractéristiques différentes : un premier système appelé « préamplificateur » ayant un fort gain « petit signal » est suivi d'un ou de plusieurs systèmes appelés « amplificateurs de puissance » permettant d'obtenir un fort rendement mais dont le gain est limité. Certains systèmes comprennent quatre amplificateurs en série, ce qui est à la fois complexe et coûteux. Afin de minimiser le nombre de composants amplificateurs, un compromis doit être fait entre les deux régimes de fonctionnement. De nombreux systèmes amplificateurs de forte puissance sont basés sur des passages multiples du faisceau dans le milieu amplificateur. Ces systèmes sont également complexes.

Une autre solution consiste à multiplier les passages du faisceau dans un milieu amplificateur afin d'extraire au maximum l'énergie stockée. Un fort gain est nécessaire en régime "petit signal". Dans ce régime, la quantité de lumière injectée dans l'amplificateur est si faible que le facteur d'amplification ne dépend que de la quantité d'énergie stockée. Celle-ci est en général très supérieure à l'énergie incidente et à l'énergie obtenue en sortie, donc le rendement est faible. C'est le cas en particulier dans les amplificateurs régénératifs qui sont des systèmes actifs dans lesquels il est nécessaire de contrôler précisément la synchronisation de l'injection et de l'éjection de l'impulsion dans la cavité dite "esclave". K. Sueda et al. ("LD pumped Yb:YAG regenerative amplifier for high average power short-pulse generation", Laser Physics Letters 5, 271-275, 2008) ont obtenu des gains supérieurs à 100 dans des cristaux de Nd :YVO$_4$ ou d'Yb :YAG pour plus de 100 W de puissance de pompe. Cette solution est certes très performante, mais elle est très coûteuse et complexe à mettre en oeuvre. C'est également le cas de systèmes qui utilisent un jeu de miroirs pour refocaliser le faisceau dans le milieu à gain. Le signal est donc amplifié grâce à de multiples passages dans la même zone amplificatrice du milieu. Toutefois, ces systèmes à passages multiples sont très complexes.

Différents milieux permettent d'amplifier des impulsions en un ou quelques passages (inférieurs à 10). On connaît des systèmes à base de solides dopés par des ions terres rares ou métalliques (comme le Nd :YVO$_4$), des systèmes à base de liquides actifs optiquement (comme dans les lasers à colorants), des systèmes à base de milieux gazeux actifs optiquement (comme le Rubidium) ou des systèmes à base de fibres de verre dopées où le signal à amplifier est guidé dans le milieu pour favoriser l'amplification. En particulier, pour amplifier des impulsions dont la longueur d'onde est autour de 1 μm, le dopage par des ions terres rares de milieux cristallins ou amorphes, et notamment les ions néodyme et ytterbium, permet d'engendrer de fortes puissances.

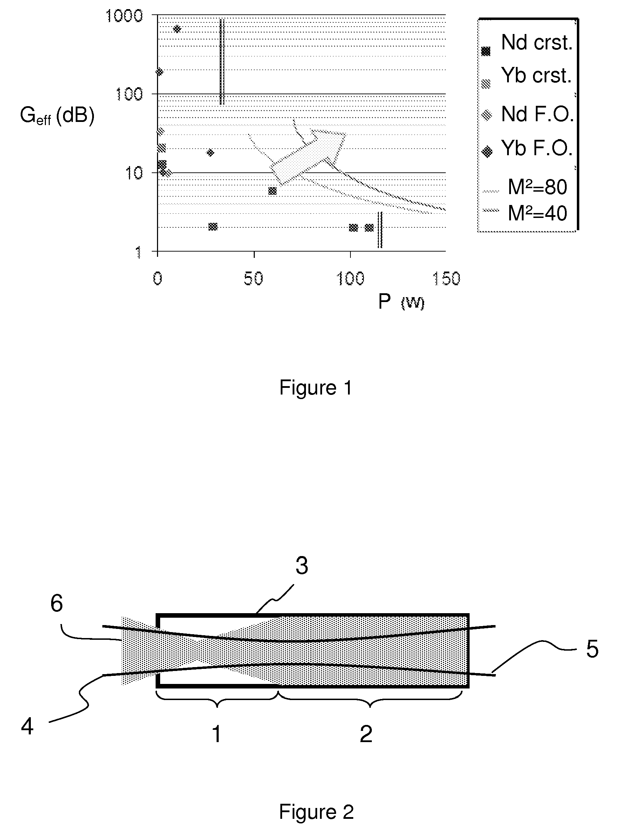

La figure 1 indique les performances en termes de gain et de puissance moyenne de sortie pour différents types de milieux amplificateurs associés à différents systèmes de pompage optique selon l'état de la technique. Ce graphique permet une cartographie des différents systèmes. Les systèmes à base de cristaux sont représentés par des carrés, et les systèmes à fibre optique par des losanges.

Selon le type de milieu amplificateur, différentes configurations de pompage optique ont été développées.

La géométrie des systèmes à base de cristaux massifs dépend fortement de la configuration de pompage qui est généralement transverse ou longitudinal.

Dans le cas d'un pompage transverse, une configuration efficace est la géométrie « slab » dans laquelle le faisceau effectue des allers-retours dans le milieu à gain après réflexion sur des miroirs afin d'extraire le maximum d'énergie et de favoriser le recouvrement entre le mode laser et le volume pompé. Un gain de l'ordre de 2 avec une puissance de sortie de 10 W après deux passages ont ainsi été obtenus dans un cristal de Nd :YVO$_4$. Cette géométrie est propice à l'utilisation de barrettes de diodes laser de forte puissance (stack) qui peuvent être placées de façon à pomper directement le milieu dans la direction transverse. Malgré la simplicité du système de pompage, cette configuration génère intrinsèquement une forte dissymétrie et d'importants effets de lentilles thermiques dans le milieu. Afin de limiter l'ellipticité du faisceau, il est possible de replier le signal pour multiplier les allers-retours dans le cristal. Dans ce cas, il est difficile d'extraire convenablement la totalité du gain présent dans le cristal. Le gain obtenu est de l'ordre de 2 avec une puissance de sortie de 102 W pour 100 W de pompe. A cette puissance de pompe, les effets thermiques sont alors très importants et limitent la montée en puissance de ce type de système.

Afin de réduire la forte lentille thermique dans une direction, une autre solution est de forcer le signal à se propager dans cette même direction (la plus petite du cristal) en faisant des "zigzag" après plusieurs réflexions totales internes sur les faces du milieu. Un gain de 12.5 et une puissance de sortie de 2.5 W ont ainsi été obtenus dans le cristal de Nd :YVO$_4$ pour 40 W de pompe. Shiradan et al. (Applied Optics 46, 7552-7565, 2007) ont utilisé cette géométrie dans un cristal d'Yb :YAG et obtenu un gain de 20 et une puissance de 2 W a été démontrée pour 16 W de pompe. Cette dernière configuration présente de plus l'avantage de simplifier le système par rapport aux précédentes et permet d'obtenir des gains importants à partir de cristaux massifs mais avec une extraction relativement limitée. Par ailleurs, la réalisation de systèmes où le signal se propage en incidence rasante ("bounce geometry") permet également de limiter les effets thermiques car le faisceau se réfléchit sur la face refroidie. Un gain de près de 5.8 ainsi qu'une puissance de sortie de 60 W ont ainsi été obtenus avec un simple passage dans un cristal de Nd:YVO$_4$. Une fois encore, l'avantage de ce système est la forte puissance de sortie, mais les effets thermiques restent un facteur limitant pour une utilisation vers de plus fortes puissances.

Un pompage longitudinal dans un cristal massif permet un recouvrement optimal entre la zone pompée et la zone de propagation du faisceau incident pour obtenir le meilleur rendement, et ainsi une puissance de sortie maximum tout en conservant un gain important. Des diodes laser de puissance dont le faisceau est mis en forme constituent d'excellentes sources de pompage et permettent d'atteindre de fortes brillances. Les densités de puissance dans le milieu à gain peuvent être alors très importantes. Ainsi, un dimensionnement soigné des optiques de pompage a permis d'obtenir, grâce à un simple passage dans un cristal de Nd :YVO$_4$ pompé à 888 nm, un gain de 2 et une puissance de sortie de plus de 110 W. De plus le pompage à 888 nm permet de réduire les effets thermiques et d'augmenter l'extraction.

La figure 1 indique que les amplificateurs de forte puissance à base de cristaux dopés permettent d'atteindre de forts rendements d'extraction, mais avec des gains limités généralement inférieurs à 13 et même à 2 dans le cas d'une puissance de sortie de l'ordre de 100 W. Les matériaux utilisés sont généralement des cristaux d'Yb :YAG ou des cristaux dopés néodyme qui se caractérisent par une forte section efficace d'émission à la longueur d'onde laser, mais qui sont limités dans la plupart des cas par les phénomènes thermiques réduisant les perspectives de montée en puissance. La stabilisation thermique du milieu à gain nécessite l'utilisation de cristaux de dimension suffisante pour supporter de fortes puissances de pompe.

D'autres systèmes amplificateurs optiques utilisent non pas un cristal massif mais une fibre optique amplificatrice. Différents types de fibres optiques amplificatrices ont été développées, en particulier des fibres de verre dopées amorphes à double coeur, des fibres à large coeur et des fibres à cristaux photoniques.

La structure des fibres amorphes à double coeur dopées par des ions terre rare permet de s'affranchir des problèmes thermiques. Dans ces fibres, l'onde de pompe est guidée de manière à répartir l'absorption sur un volume important et ainsi limiter l'échauffement. Le faisceau signal est également guidé dans un coeur dopé faiblement multimode ce qui permet de conserver une excellente qualité de faisceau ainsi qu'un excellent rendement grâce au recouvrement parfait entre les faisceaux du signal et de la pompe. Ainsi, l'amplification d'impulsions avec de forts gains et à travers un schéma relativement simple a été démontrée à partir de fibres optiques dopées par des ions néodyme ou ytterbium. Des gains de 10 à 20 ont été obtenus dans des fibres de coeur de diamètre inférieur à 11 $\mu$m et de plusieurs mètres de long. Cependant, cette amplification est limitée par un fort taux d'émission spontanée amplifiée. Par ailleurs, les principaux facteurs limitant cette architecture apparaissent dès que l'on souhaite amplifier des impulsions à la fois courtes (de l'ordre de la dizaine de nanosecondes et moins) et énergétiques (dès la dizaine de microjoules). En effet, la puissance crête qui se propage dans le milieu amplificateur est suffisante pour générer de forts effets non linéaires indésirables comme l'effet Raman, l'émission Brillouin stimulée ou encore l'auto modulation de phase. Ces effets sont la principale limitation des fibres amorphes pour atteindre des puissances moyennes importantes en sortie.

Afin de limiter les effets non linéaires indésirables, des fibres à large coeur (plus de 15 $\mu$m de rayon) ou de faible longueur ont été développées. A partir d'une fibre de 50 $\mu$m de diamètre et une énergie injectée de 4 $\mu$J (impulsions d'une durée de l'ordre de la nanoseconde), 750 $\mu$J à 1 kHz (soit 750 mW) ont été obtenus pour 7 W de pompe, soit un gain de 190. Cheng et al. (Optics Letters, 30, 358-360, 2005) ont utilisé une fibre de 200 $\mu$m de diamètre de coeur, ayant une émission fortement multimode, pour amplifier des impulsions préamplifiées jusqu'à 2.7 mJ avec un gain de 10. Une fibre en phosphate ayant un coeur de 10 $\mu$m de diamètre fortement dopé en ions Yb3+, et une longueur limitée à seulement 47 cm a permis la réalisation d'un amplificateur relativement simple avec un gain de 28 dB (soit un gain net de 690) et une puissance de sortie correspondante de 10 W. Cette performance constitue le gain le plus élevé obtenu représenté sur la figure 1.

Les fibres à cristaux photoniques ("Rod-type") dont la taille du coeur dopé varie entre 50 et 100 $\mu$m de diamètre sont également une solution prometteuse. Des impulsions de 85 picosecondes et de 40 mW ont été amplifiées dans un premier amplificateur à fibre jusqu'à 1.5 W puis dans une fibre à cristaux photoniques de 70 $\mu$m de diamètre de coeur jusqu'à 27 W pour 100 W de pompe, avec un gain dans la fibre à très large coeur d'environ 18. Ces valeurs sont très importantes et elles constituent une solution intermédiaire à l'obtention à la fois de fort gain et de forte puissance moyenne. Cependant, cette solution nécessite l'utilisation d'un milieu relativement complexe et reste limitée à l'amplification d'impulsions d'énergie inférieure à quelques millijoules au maximum, en fonction du diamètre de coeur dopé utilisé, afin de rester en dessous des seuils de densité d'énergie pour le verre dopé (environ 22 J/cm$^2$ pour des impulsions de 1 ns à la longueur d'onde de 1 $\mu$m).

Le document de brevet WO2006/016276A1 ( Fibercryst) décrit un dispositif à guide optique de forme allongée comprenant un coeur dopé et une gaine non dopée, dans lequel une onde de pompe est couplée longitudinalement à une extrémité du guide. Le dispositif est configuré de manière à ce que l'onde de pompe recouvre la totalité du volume du guide d'onde.

Le document de brevet WO2007/051138A2 (Laserscope) décrit un laser comprenant un milieu à gain solide dans une cavité résonante, une source de pompage et des composants optiques arrangés pour focaliser l'énergie de pompage sur une extrémité du milieu à gain. Les composants optiques de la cavité résonante sont configurés pour être adaptés en mode avec le faisceau de pompe au point focal.

En résumé, les fibres de verre dopées, classiques ou à cristaux photoniques, permettent de concentrer fortement la pompe et le signal mais aussi de supporter de fortes puissances de pompe tout en conservant une excellente qualité spatiale de faisceau. La figure 1 indique clairement que les amplificateurs à fibre permettent d'obtenir les valeurs de gain les plus importantes. Cependant, leurs dimensions sont, pour le moment, limitées à plusieurs dizaines de microns de coeur. Ceci est un facteur limitant pour l'amplification d'impulsions de fortes énergies (donc de fortes puissances moyennes) du fait des seuils d'apparition des effets non linéaires et de dommage du verre. Cette limite apparaît sur la figure 1 : les puissances moyennes des amplis à fibre restent inférieures à 30 W.

Les performances obtenues en termes de gain et de puissance moyenne en sortie de différents types de milieux amplificateurs couplés à différents systèmes de pompage de l'état de la technique sont illustrées sur le graphique de la figure 1. Ce graphique permet une cartographie des différents systèmes. Deux tendances générales s'en déduisent. D'une part, les cristaux massifs permettent d'atteindre de fortes puissances moyennes mais avec un gain relativement faible. D'autre part, les fibres permettent d'atteindre de forts gains, mais avec une puissance de sortie limitée. En résumé, les amplificateurs de l'état actuel de la technique ne permettent pas d'obtenir à la fois un fort gain et une forte puissance moyenne.

Un des buts de l'invention est de proposer un système amplificateur par pompage optique qui permette de s'affranchir des limitations thermiques des amplificateurs à cristaux ainsi que des effets non linéaires indésirables et des seuils de dommage dans les fibres de verre dopées, tout en étant simple à mettre en oeuvre.

Dans ce document, on entend par « guider l'onde de pompe » la capacité d'un milieu à confiner l'onde de pompe par réflexion ou par un gradient d'indice.

La présente invention a pour but de remédier à ces inconvénients et concerne plus particulièrement un système amplificateur optique pour laser à impulsions courtes ou ultra-courtes et énergétiques comprenant une source de pompage optique apte à générer une onde de pompe, un milieu amplificateur allongé comprenant une interface d'entrée apte à recevoir un signal optique à amplifier, ledit milieu étant apte à amplifier ledit signal optique se propageant le long dudit milieu amplificateur et apte à extraire un signal amplifié, et un système optique apte à coupler ladite onde de pompe dans le milieu amplificateur pour pomper longitudinalement ledit milieu amplificateur.

Selon l'invention, le milieu amplificateur est un milieu à gain apte à guider l'onde de pompe, ledit milieu guide de pompe ayant une dimension transverse minimum $\phi_3$ sur l'interface d'entrée et le système optique est apte à focaliser l'onde de pompe à l'intérieur du milieu amplificateur, ladite onde de pompe focalisée ayant une

dimension transverse $\phi_6$ inférieure à la dimension transverse minimum $\phi_3$ et une ouverture numérique inférieure à l'ouverture numérique du milieu amplificateur de manière à ce que ladite onde de pompe se propage librement sur une première partie du milieu amplificateur, et à ce que ladite onde de pompe se propage de manière confinée sur une seconde partie du milieu amplificateur.

Avantageusement, le milieu amplificateur est un milieu solide dopé aux ions terre rare ou métalliques.

Préférentiellement, le milieu amplificateur est dopé par des ions Néodyme ou Ytterbium.

Selon un autre mode de réalisation de l'invention, le milieu amplificateur comprend une cellule allongée contenant un gaz apte à amplifier le signal optique par pompage optique.

Selon un autre mode de réalisation de l'invention, le milieu amplificateur comprend une cellule allongée contenant un liquide comprenant des particules ou des mollécules aptes à amplifier le signal optique par pompage optique.

Selon un mode de réalisation de l'invention, le milieu amplificateur est à symétrie de révolution et de dimension transverse $\phi_3$ supérieure à 50 $\mu$m.

Avantageusement, le milieu amplificateur comprend un coeur et une gaine, le signal optique à amplifier se propageant dans le coeur du milieu amplificateur. Avantageusement, la source de pompage optique et le système optique sont aptes à focaliser l'onde de pompe de manière à ce que ladite onde de pompe se propage librement sur une longueur supérieure à 1 mm du milieu amplificateur. Avantageusement, le système amplificateur comprend une seconde source de pompage optique apte à générer une seconde onde de pompe, apte à pomper optiquement la seconde partie du milieu amplificateur de manière transverse à l'axe de propagation du signal à amplifier ou de manière longitudinale et contrapropagative par rapport à l'axe de propagation du signal à amplifier.

Avantageusement, le signal à amplifier effectue au plus deux passages dans le milieu amplificateur.

L'invention concerne également un laser à impulsions comprenant un oscillateur apte à émettre des impulsions à amplifier, ledit laser comprenant un système amplificateur suivant l'un des modes de réalisation de l'invention. L'invention offre un système compact, simple à mettre en oeuvre et de fort gain qui permet de combiner en un seul objet les fonctions de préamplificateur et d'amplificateur à extraction.

Cette description est donnée à titre d'exemple non limitatif et fera mieux comprendre comment l'invention peut être réalisée en référence aux dessins annexés sur lesquels :

- la figure 1 représente les performances de gain et puissance de sortie de différents amplificateurs de puissances en régime impulsionnel ;
- la figure 2 représente schématiquement le principe de fonctionnement du système d'amplification et de pompage et selon l'invention ;
- la figure 3 représente des courbes de gain linéique le long du milieu amplificateur selon l'art antérieur et selon l'invention ;
- la figure 4 est une projection d'une vue en 3D d'un tracé de rayons de l'onde de pompe dans un système amplificateur selon l'invention ;
- la figure 5 représente des simulations de courbes de gain effectif en fonction de la puissance de sortie obtenue pour différentes configurations de pompe ;
- la figure 6 représente différents schémas de couplage de l'onde de pompe dans le milieu amplificateur correspondant à différents facteurs de qualité de l'onde de pompe ;
- la figure 7 représente un premier exemple d'application de l'invention dans un amplificateur d'impulsions nanosecondes, dans lequel le milieu à gain est une fibre monocristalline en Nd:YAG ;
- la figure 8 représente un second exemple d'application de l'invention à un amplificateur d'impulsions ultrabrèves de hautes énergies, dans lequel le milieu à gain est une fibre monocristalline dopée Ytterbium
- la figure 9 représente une vue en coupe longitudinale du milieu à gain selon un mode de réalisation particulier dans lequel une onde de pompe est couplée selon l'invention dans un milieu à gain guidant, et dans lequel une onde de pompe transverse ou longitunale contrapropagative est couplée dans la zone d'amplification du milieu à gain.

L'invention utilise la combinaison d'un milieu à gain guidant (pour l'onde de pompe) et d'une source de pompage suffisamment brillante pour augmenter à la fois le gain et le rendement d'amplification.

Le milieu à gain guidant 3 peut être par exemple une fibre monocristalline ou une fibre optique de verre dopée, ou encore un milieu à gain guidant dans une direction transverse. Les dimensions physiques (longueur et diamètre ou dimension transverse du guide de pompe) de ce milieu sont adaptées à la propagation libre de l'onde de pompe sur une longueur suffisante pour que le milieu à gain comprenne deux zones de fonctionnement bien distinctes : une première "zone de préamplification" 1 correspond à un régime de préamplification et une seconde "zone d'extraction" 2 correspond à un régime d'amplification de puissance et d'extraction. Ce fonctionnement est illustré schématiquement sur la figure 2 qui représente une vue en coupe longitudinale du milieu à gain 3 dans lequel se propage un faisceau 4 à amplifier et une onde de pompe 6. La combinaison des deux zones 1 et 2 dans un seul milieu amplificateur 3 rend le système à la fois compact, simple et efficace car il permet d'amplifier des impulsions de forte énergie avec un gain important, tout en maintenant un fort rendement d'extraction.

Le milieu à gain 3 est suffisamment long pour permettre de répartir l'onde pompe 6 sur un volume important et éviter ainsi les problèmes thermiques. Le milieu à gain 3 peut être un milieu monocristallin ou amorphe (verre dopé). Ce milieu à gain 3 guide une onde de pompe 6, par exemple par réflexions totales internes ou par la présence d'une structure coeur-gaine avec une différence d'indice suffisante pour assurer le guidage du faisceau de pompe. Le milieu à gain 3 doit également supporter des densités de puissances de pompe et de signal importantes car le principal intérêt est l'utilisation en tant qu'amplificateur de forte puissance, c'est à dire susceptible de supporter des puissances de pompe de plusieurs centaines de watts et des puissances crêtes pour le signal supérieures aux mégawatts.

Un exemple de milieu 3 qui se prête bien à la réalisation de ce type de système d'amplification est un milieu à gain à base de fibre monocristalline dopée. Les propriétés d'une fibre monocristalline utilisée comme milieu laser sont décrites dans le document de brevet WO2006106276. Les paramètres de ce type de fibre sont particulièrement bien adaptés à l'utilisation de cette fibre avec des diodes de pompage de forte puissance. En effet, le diamètre $\phi_3$ de ce milieu est compris entre 200 et 1000 $\mu$m ce qui correspond à la gamme de taille de faisceau de pompe provenant d'une diode laser de puissance disponible actuellement sur le marché. La pompe est par exemple une diode laser de puissance fibrée délivrant une puissance de plusieurs dizaines à centaines de watts en sortie d'une fibre de 100 à 400 $\mu$m de diamètre et d'ouverture numérique égale à 0,22 (la brillance de la pompe est alors supérieure à plusieurs centaines de kW/cm²/sr). Le faisceau issu de cette pompe est focalisé à l'intérieur du milieu à gain au moyen d'un système optique d'imagerie ayant un grandissement de l'ordre de 1. La zone 1 de préamplification a une longueur $L_1$ de quelques millimètres à quelques centimètres. Pour un milieu amplificateur à base de fibre cristalline, une longueur $L_1$ supérieure à quelques centimètres ainsi que l'excellente répartition de l'échauffement thermique lors de l'absorption du faisceau de pompe sont également des qualités importantes pour ce milieu.

Selon un 1er exemple de réalisation, le milieu amplificateur 3 comprend une fibre monocristalline dopée ytterbium de 700$\mu$m de diamètre et 50 mm de long. Le milieu amplificateur est pompé au moyen d'une diode laser de 200 W couplée à une fibre de transport de 200 $\mu$m de diamètre de coeur et l'onde de pompe est focalisée à l'intérieur du milieu amplificateur 3 au moyen d'un système optique de grandissement 1. L'association de ces deux technologies permet d'atteindre les performances représentées sur la figure 1 par deux courbes, en fonction de la brillance de la pompe.

Comme représenté sur la figure 2, le milieu 3 est composé fonctionnellement de deux parties le long du milieu amplificateur : une 1ère partie de préamplification 1 et une 2nde partie d'amplification-extraction 2.

La "zone de préamplification" 1 est définie comme le volume du milieu à gain où l'onde de pompe 6 se propage librement, ce qui permet de focaliser une onde de pompe 6 de bonne qualité à l'intérieur du milieu à gain 3. Cette focalisation permet d'obtenir une densité de puissance très importante : pour une puissance de 100 W focalisée sur un diamètre $\phi_6$ de 200 $\mu$m, la densité est supérieure à 300 kW/cm². Ainsi le faisceau incident 4 de faible puissance voit ici un très fort gain (peu saturé par le signal) et est fortement amplifié grâce à la forte densité de puissance de pompe 6.

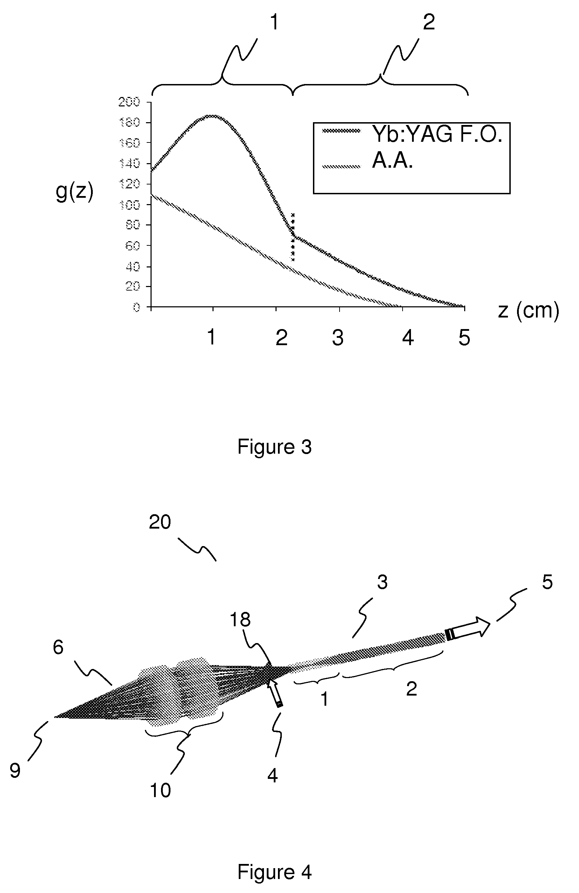

L'intérêt d'une telle zone 1 par rapport à un pompage réparti par guidage dès le début du milieu amplificateur (ie dès l'interface d'entrée 7 dans le milieu 3) est illustré sur la figure 3. Dans la première partie 1, l'augmentation locale de la densité de puissance induit une augmentation très importante du gain linéique (c'est-à-dire le gain disponible par unité de longueur de milieu).

Dans la "zone d'extraction" 2, l'onde de pompe 6 est répartie sur le volume de cette zone 2, du fait des propriétés de guidage du signal à partir d'une certaine coordonnée longitudinale (définie par le choix de l'optique de pompe) le long de l'axe optique. De cette façon, si l'on considère par hypothèse que le profil de l'onde de pompe 6 est quasiment uniforme, le gain est homogénéisé et les dimensions de cette zone sont suffisamment importantes pour que le faisceau 4 à amplifier ait lui aussi une taille importante de telle sorte qu'il ne soit pas guidé dans cette zone 2. Le diamètre du faisceau 4 est de l'ordre de la moitié de diamètre du milieu 3, donc supérieur à plusieurs centaines de micromètres. Ainsi, la densité de puissance amplifiée présente localement dans cette zone d'extraction est considérablement réduite. Par conséquent, il est possible de dépasser les limites en énergies que peuvent supporter actuellement les fibres dopées large coeur.

Dans une fibre optique double coeur classique, dans laquelle le signal est guidé dans un coeur de petite taille (quelques dizaines de microns), le signal optique dépasse le seuil de dommage (autour de 20 J/cm2) dés que l'énergie des impulsions lumineuses dépasse environ 1 mJ.

Dans l'invention présentée ici, le fait que le signal optique puisse se propager avec un diamètre bien supérieur (typiquement de plusieurs centaines de microns) permet d'obtenir des impulsions de plusieurs dizaines de millijoules sans atteindre le seuil de dommage.

Nous considérons maintenant le cas particulier d'un milieu 3 dopé dans lequel l'absorption de la pompe peut être saturée. Dans la zone 1 de préamplification, la densité de puissance est d'autant plus importante dans le cas d'un dopage avec un ion ayant une structure à quasi-trois niveaux comme l'ytterbium grâce au phénomène de saturation de l'absorption. En effet, la puissance de pompe 6 reste très importante sur une zone plus longue au cours de la propagation le long de l'axe optique grâce à la saturation, donc l'effet de préamplification est plus important. Le gain linéique dans la zone d'extraction 2 est lui aussi plus élevé car la puissance de pompe 6 alors disponible est plus importante dans cette partie du milieu 3 par rapport à un milieu où l'absorption serait répartie. Cette tendance est très nette sur la figure 3. Un dopage par des ions ayant une structure à quasi-trois niveaux est donc particulièrement intéressant car il renforce les effets décrits dans les paragraphes précédents, néanmoins ce n'est pas une condition nécessaire au bon fonctionnement de notre invention.

Nous avons cherché à comparer le comportement du système de l'invention complet {Zone de préamplification + zone d'extraction} à celui du même milieu 3 mais utilisant uniquement une zone d'extraction 2, c'est-à-dire si la pompe 6 est immédiatement guidée dans le milieu 3. Dans cette configuration, le profil transverse de pompe à l'intérieur est supposé être uniforme dans tout le milieu 3.

La simulation du comportement d'un barreau de cristal laser (celui-ci peut être par exemple une fibre monocristalline) d'Yb :YAG de longueur 50 mm, de diamètre 1 mm, dopé à 1 %, et excité par une puissance de pompe totale de 200 W sur la face d'entrée et dans lequel l'absorption de la pompe 6 est répartie le long du milieu 3 est représentée figure 3. Dans le cas d'un pompage uniforme, celui-ci peut être rendu homogène soit par le guidage immédiat du signal de pompe dans le milieu, soit grâce à un système optique "homogénéiseur".

La courbe (A.A.) du bas de la figure 3 représente le gain linéique pour un pompage longitudinal uniforme du milieu 3.

On constate que le dispositif de l'invention permet d'augmenter les valeurs de gain du milieu de façon considérable grâce à une géométrie permettant d'utiliser deux zones de gain 1 et 2 successives dans un unique milieu.

Nous avons évoqué précédemment les qualités requises pour le milieu à gain 3. L'invention étant basée sur la combinaison de ce milieu 3 aux propriétés particulières (longueur et dimension transverse) ainsi qu'à l'utilisation d'un système de pompage optique, nous détaillons maintenant la qualité requise du faisceau de pompe pour atteindre les meilleures performances, à savoir à sa brillance.

Si l'on fixe la puissance de la source de pompe 9, étudier l'influence de la brillance revient à s'intéresser à la qualité spatiale du faisceau de pompe 6. Celle-ci peut s'évaluer par le facteur de qualité $M^2$ qui permet d'évaluer la façon dont un faisceau diverge par rapport à un faisceau gaussien idéal qui a un facteur de qualité $M^2$ égal à 1. Ce facteur de qualité $M^2$ du faisceau de pompe est donné par la formule suivante :

$$M^2 = \frac{\pi.\omega_0.\theta}{\lambda}$$

Où $\lambda$ est la longueur d'onde de pompe, $\omega_0$ la taille du faisceau imposée par le rayon de la fibre de transport et $\theta$ la divergence du faisceau. Les diodes laser de puissance fibrées disponibles actuellement ont un facteur $M^2$ compris 20 et 200.

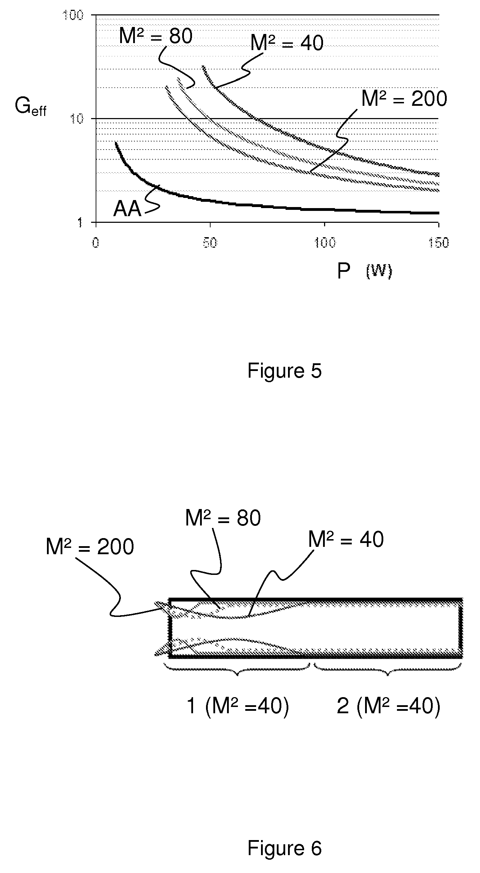

A titre de comparaison, la figure 5 illustre différentes courbes de gain effectif en fonction de la puissance que l'on peut obtenir en sortie pour la configuration de pompage utilisée précédemment et en faisant varier le paramètre $M^2$ avec $M^2$ égal à 40, 80 et 200 respectivement (cf figure 5). Le milieu 3 est une fibre cristalline en Yb:YAG de 700 $\mu$m de diamètre, de 50 mm de long et dopée à 1 % en ions $Yb^{3+}$. La puissance de pompe est fixée à 200 W et une taille de waist de pompe dans le milieu à gain de 200 $\mu$m (cf. figure 5).

Les courbes de gain effectif $G_{eff}$ pour différents facteurs de qualité du faisceau de pompe dans un système conforme à l'invention sont comparés avec celle d'un amplificateur classique avec pompage uniforme guidé sur toute la longueur du milieu amplificateur (courbe AA de la figure 5).

Une représentation détaillée du schéma de pompage est donnée en figure 6 pour trois valeurs du facteur de qualité du faisceau de pompe : respectivement $M^2$ égal à 40, 80 et 200. On remarque que la longueur de la zone de préamplification 1 dépend directement de la configuration de pompage utilisée. Cependant, comme nous l'avons souligné auparavant, la longueur du milieu 3 est supérieure à quelques centimètres afin de répartir au mieux la charge thermique. De plus, si la brillance du système de pompage est très bonne ($M^2$ faible), la longueur totale du milieu à gain 3 est augmentée de la longueur pour conserver la bonne répartition thermique. Au-delà de quelques centimètres de longueur de propagation, l'onde de pompe 6 finit par être guidée, et ainsi le milieu 3 comporte toujours deux zones de fonctionnement 1 et 2 bien distinctes (cf. figure 6). Cette propriété de brillance du faisceau de pompe 6 influence non seulement la longueur de la zone de préamplification 1, mais aussi la densité de puissance de pompe qui peut être couplée dans cette zone et par conséquent le gain disponible dans le milieu 3. En effet, d'après la figure 5, la qualité de faisceau du système de pompage a un rôle primordial. L'évolution des courbes respectivement de facteur de qualité $M^2$ égal à 40, 80 et 200 indique qu'une réduction de la brillance ($M^2$ élevé) engendre une réduction du gain et de la puissance obtenue en sortie. On remarque par ailleurs que même dans le cas d'une faible brillance du faisceau de pompe ($M^2 \sim 200$), la courbe de gain effectif est supérieure à une courbe de gain correspondant à un pompage homogénéisé.

En conclusion, le dimensionnement du système d'amplification de l'invention dépend de la combinaison de deux sous-système (le milieu à gain 3 et le schéma de pompage) pour parvenir aux meilleurs résultats possibles.

Un premier exemple de réalisation de l'invention, le pompage est effectué au moyen d'une diode laser fibrée de 200 $\mu$m de diamètre de coeur (correspondant à un facteur de qualité $M^2$=40) et de 200 W de puissance maximale. Un système optique 10 forme l'image de la sortie de la fibre optique de transport de la pompe à l'intérieur du milieu amplificateur 3 : l'onde de pompe est focalisé à 7 mm de la face d'entrée avec un diamètre de waist de pompe de 200 μm. La figure 4 représente schématiquement les composants de ce mode de réalisation, ainsi qu'un tracé des rayon du faisceau de pompe à travers le système. Le faisceau à amplifier 4 est couplé dans le milieu 3 au moyen d'un miroir 18 semi-réfléchissant. Le faisceau amplifié 5 est extrait après un unique passage à travers les zones 1 et 2 du milieu 3.

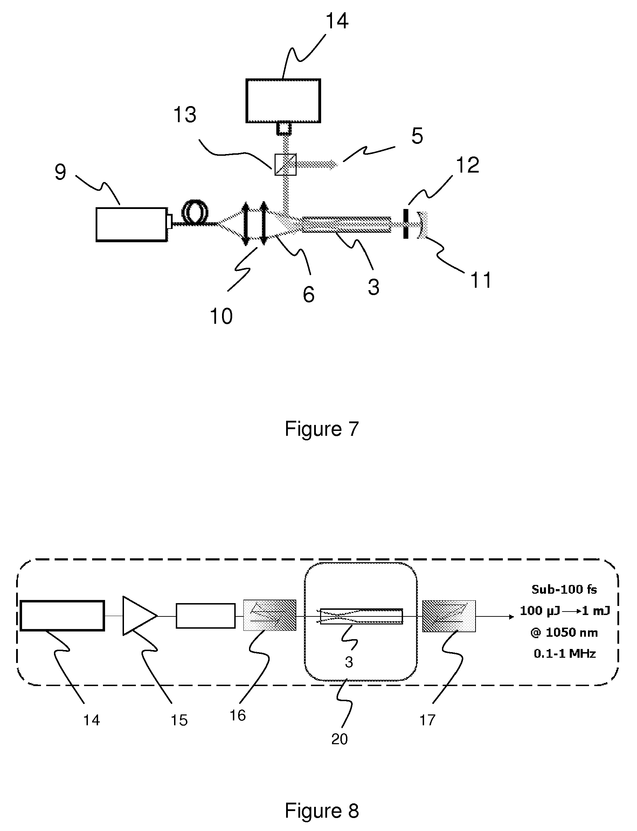

Une application de l'invention concerne un amplificateur d'impulsions microlaser nanoseconde. Le système est représenté schématiquement figure 7. Un oscillateur 14 émet des impulsions de durée inférieure à 1 nanoseconde (800 picosecondes) à une longueur d'onde de 1064 nm et avec une puissance moyenne de l'ordre de 100 mW. Le milieu à gain 3 comprend une fibre monocristalline de Nd :YAG dopé 0.25 at.% de 1 mm de diamètre et de 50 mm de long. Une diode de pompe 9 fibrée est focalisée dans une première zone 1 du milieu à gain 3. Le système peut fonctionner avec un unique passage des impulsions à travers le milieu 3 ou deux passages (un aller-retour). Dans le cas illustré figure 7, les impulsions parcourent le milieu 3 en faisant un premier passage dans le milieu 3. Un miroir de renvoi 11 et une lame quart d'onde 12 permettent au signal amplifié 5 de faire un second passage dans le milieu 3 avant d'être extrait, par exemple au moyen d'un cube séparateur de polarisation 13. Ce système permet d'obtenir des puissances moyennes de sortie supérieures à plusieurs watts avec un gain supérieur à 10 pour un unique passage.

Le système de l'invention a l'avantage de la simplicité par rapport aux systèmes antérieurs. Ses possibilités de montée en puissance ne sont pas limitées par des effets thermiques, par des effets non linéaires indésirables ou par la tenue en énergie du matériau.

Un second exemple d'application concerne l'utilisation d'un système amplificateur de l'invention dans le dernier étage amplificateur d'un laser de puissance à impulsions ultra brèves (inférieures à la picoseconde voire à la centaine de femtosecondes) et de fortes énergies.

La figure 8 représente une chaîne laser comprenant un oscillateur 14 délivrant des impulsions femtosecondes de faible puissance moyenne, amplifiées à travers un préamplificateur 15, un étireur 16, un système amplificateur 20 conforme à l'invention et un compresseur 17. Le système amplificateur 20 de l'invention remplace ici un milieu amplificateur dans un schéma classique d'amplification à dérive de fréquence. Le milieu 3 à très fort gain peut être une fibre à très large coeur ou une fibre monocristalline dopée ytterbium pour permettre d'atteindre des niveaux d'énergie très importants (plusieurs centaines de μJ pour des impulsions sub-femtosecondes). Le système n'est pas limité par les effets non linéaires comme dans les amplificateurs à fibres de verre dopées. La configuration de l'amplificateur est ici aussi relativement simple, comparée aux systèmes complexes à base de cristaux de saphir dopé au titane.

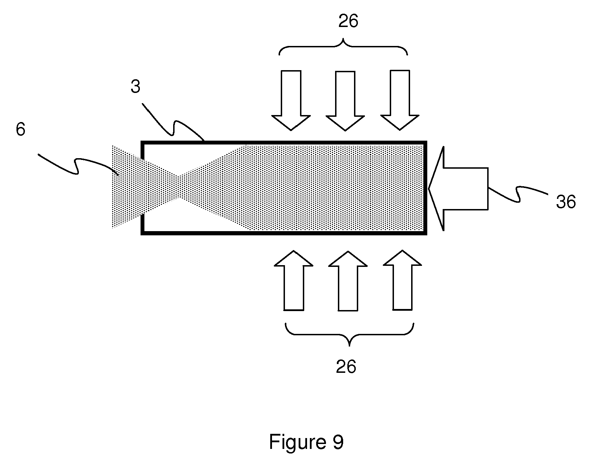

La figure 9 représente un schéma de pompage du milieu à gain selon un mode de réalisation particulier de l'invention. L'onde de pompe principale 6 est couplée selon l'invention dans la zone 1 du milieu à gain guidant 3 comme décrit plus haut. Selon ce mode de réalisation, une onde de pompe auxiliaire est utilisée pour pomper la zone d'amplification du milieu à gain de manière transverse (26) et/ou longitunale contrapropagative (36).

L'invention permet d'améliorer à la fois les performances de gain et de puissance de sortie d'un amplificateur. Les valeurs de gain effectif importantes ainsi que des puissances de sortie élevées peuvent ainsi être obtenues.

L'invention simplifie ainsi la réalisation d'amplificateurs, en combinant les fonctions de préamplification et d'amplification-extraction dans un seul et même milieu amplificateur.

L'invention utilise la géométrie particulière d'un milieu à gain guidant pour l'onde de pompe qui permet d'injecter une onde de pompe de bonne qualité de façon à réaliser un milieu au fonctionnement hybride qui permet d'obtenir à la fois des propriétés de fort gain et d'extraction efficace.

Selon la présente invention, le faisceau n'effectue qu'un voire deux passages au maximum dans le milieu à gain et la zone amplificatrice n'est ainsi sondée que deux fois au maximum.

L'invention permet donc d'augmenter les valeurs de gain intrinsèque au milieu de façon considérable grâce à une géométrie de couplage du faisceau de pompe qui permet d'utiliser deux zones de gain bien distinctes comme dans un unique milieu. Ainsi, les performances en terme de gain effectif et de puissance de sortie sont améliorées simultanément d'un facteur pouvant être élevé.

L'invention propose un système amplificateur optique qui permet d'aller au-delà des limitations thermiques des amplificateurs à cristaux et au-delà des domaines d'apparition des effets non linéaires et des seuils de dommage des fibres de verre dopées, tout en étant simple à mettre en oeuvre.

**Revendications**

1. Système amplificateur optique (20) pour laser à impulsions courtes ou ultra-courtes et énergétiques comprenant :

- une source de pompage optique apte à générer une onde de pompe (6),
- un milieu amplificateur (3) allongé comprenant une interface d'entrée (7) apte à recevoir un signal optique (4) à amplifier, ledit milieu (3) étant apte à amplifier ledit signal optique (4) se propageant le long dudit milieu amplificateur et apte à extraire un signal amplifié (5),
- un système optique (10) apte à coupler l'onde de pompe (6) dans le milieu amplificateur (3) pour pomper longitudinalement ledit milieu amplificateur (3),
**caractérisé en ce que** :

- le milieu amplificateur (3) est à symétrie de révolution, tel qu'une fibre dopée, et de dimension transverse $\phi_3$ supérieure à 50 $\mu$m et inférieure à 1000 $\mu$m,
- le milieu amplificateur (3) est un milieu à gain guidant adapté pour guider ladite onde de pompe, ledit milieu (3) guide de pompe ayant une dimension transverse minimum $\phi_3$ sur l'interface d'entrée (7),
- le système optique (10) est apte à focaliser l'onde de pompe (6) à l'intérieur du milieu amplificateur (3), ladite onde de pompe focalisée ayant une dimension transverse $\phi_6$ au point focal inférieure à la dimension transverse minimum $\phi_3$ et une ouverture numérique inférieure à l'ouverture numérique du milieu amplificateur (3) de manière à ce que ladite onde de pompe se propage librement sur une partie (1) du milieu amplificateur (3), et à ce que ladite onde de pompe (6) se propage de manière confinée sur une partie (2) du milieu amplificateur par réflexion interne totale à l'intérieur du milieu à gain guidant (3).

2. Système selon la revendication 1, **caractérisé en ce que** le milieu amplificateur (3) est un milieu solide dopé aux ions terre rare ou métalliques.

3. Système selon la revendication 1, **caractérisé en ce que** le milieu amplificateur (3) comprend une cellule allongée contenant un gaz apte à amplifier le signal optique (4) par pompage optique.

4. Système selon la revendication 1, **caractérisé en ce que** le milieu amplificateur (3) comprend une cellule allongée contenant un liquide comprenant des particules ou des molécules aptes à amplifier le signal optique (4) par pompage optique.

5. Système selon l'une des revendications 1 à 4, **caractérisé en ce que** le milieu amplificateur (3) comprend un coeur et une gaine, le signal optique à amplifier (4) se propageant dans le coeur du milieu (3).

6. Système selon l'une des revendications 1 à 5, **caractérisé en ce que** la source de pompage optique et le système optique (10) sont aptes à focaliser l'onde de pompe (6) de manière à ce que ladite onde de pompe se propage librement sur une longueur supérieure à 1 mm du milieu (3).

7. Système selon l'une des revendications 1 à 6, **ca-**

**ractérisé en ce qu'**il comprend une seconde source de pompage optique apte à générer une seconde onde de pompe (26, 36), apte à pomper optiquement la partie (2) du milieu amplificateur (3) de manière transverse à l'axe de propagation du signal à amplifier ou de manière longitudinale et contrapropagative par rapport à l'axe de propagation du signal à amplifier.

8. Système selon l'une des revendications 1 à 7, **caractérisé en ce que** le signal à amplifier effectue au plus deux passages dans le milieu amplificateur (3).

9. Laser à impulsions comprenant un oscillateur (14) apte à émettre des impulsions à amplifier, ledit laser étant **caractérisé en ce qu'**il comprend un système amplificateur selon l'une des revendications 1 à 8.

**Patentansprüche**

1. Optisches Verstärkersystem (20) for Laser mit kurzen oder ultrakurzen und energiereichen Impulsen, mit:

einer optischen Pumpquelle, die geeignet ist, eine Pumpwelle (6) zu erzeugen, einem länglichen Verstärkungsmedium (3) mit einer zum Empfang eines zu verstärkenden optischen Signals (4) geeigneten Eingangsschnittstelle (7), wobei das Medium (3) dazu geeignet ist, das sich entlang des Verstärkermediums ausbreitende optische Signal (4) zu verstärken und ein verstärktes Signal (5) abzugreifen, einem optischen System (10), das geeignet ist, die Pumpwelle (6) in das Verstärkermedium (3) einzukoppeln, um das Verstärkermedium (3) längs zu pumpen,
**dadurch gekennzeichnet, daß**

das Verstärkermedium (3) rotationssymmetrisch ist, wie etwa eine dotierte Faser, und eine Querabmessung $\Phi_3$ von größer als 50 $\mu$m und kleiner als 1000 $\mu$m aufweist, das Verstärkermedium (3) ein Medium mit führender Verstärkung ist, das dafür ausgelegt ist, die Pumpwelle zuführten, wobei das Pumpführungsmedium (3) eine minimale Querabmessung $\Phi_3$ zur Eingangsschnittstelle (7) aufweist, das optische System (10) dazu geeignet ist, die Pumpwelle (6) im Inneren des Verstärkermediums (3) zu fokussieren, wobei die fokussierte Pumpwelle im Fokus eine Querabmessung $\Phi_6$ von kleiner als der minimalen Querabmessung $\Phi_3$ und eine numerische Apertur von kleiner als der numerischen Apertur des Verstärkermediums (3) aufweist, damit sich die Pumpwelle frei über einen Teil (1) des Verstärkermediums (3) ausbreitet, und daß sich die Pumpwelle (6) durch interne Reflexion am Inneren des Mediums (3) mit führender Verstärkung auf einen Teil (2) des Verstärkermediums beschränkt ausbreitet.

2. System gemäß Anspruch 1, **dadurch gekennzeichnet, daß** das Verstärkermedium (3) ein mit Seltenerd- oder Metallionen dotiertes festes Medium ist.

3. System gemäß Anspruch 1, **dadurch gekennzeichnet, daß** das Verstärkermedium (3) eine längliche Zelle aufweist, die ein zum Verstärken des optischen Signals (4) durch optisches Pumpen geeignetes Gas enthält.

4. System gemäß Anspruch 1, **dadurch gekennzeichnet, daß** das Verstärkermedium (3) eine längliche Zelle aufweist, die eine Flüssigkeit enthält, die zum Verstärken des optischen Signals (4) durch optisches Pumpen geeignete Partikel oder Moleküle aufweist.

5. System gemäß einem der Ansprüche 1 bis 4, **dadurch gekennzeichnet, daß** das Verstärkermedium (3) einen Kern und eine Ummantelung aufweist, wobei sich das zu verstärkenden Signal (4) im Kern des Mediums (3) ausbreitet.

6. System gemäß einem der Ansprüche 1 bis 5, **dadurch gekennzeichnet, daß** die optische Pumpquelle und das optische System (10) dazu geeignet sind, die Pumpwelle (6) so zu fokussieren, daß sich die Pumpwelle frei über eine Länge des Mediums (3) von mehr als 1 mm ausbreitet.

7. System gemäß einem der Ansprüche 1 bis 6, **dadurch gekennzeichnet, daß** eine zum Erzeugen einer zweiten Pumpwelle (26, 36) geeignete zweite optische Pumpquelle aufweist, die dazu geeignet ist, den Teil (2) des Verstärkermediums (3) quer zur Ausbreitungsachse des zu verstärkenden Signals oder gegenläufig längs zur Ausbreitungsachse des zu verstärkenden Signals optisch zu pumpen.

8. System gemäß einem der Ansprüche 1 bis 7, **dadurch gekennzeichnet, daß** das zu verstärkende Signal höchstens zwei Durchgänge durch das Verstärkermedium (3) ausführt.

9. Impulslaser mit einem Oszillator (14), der dazu geeignet ist, zu verstärkende Impulse auszugeben, wobei der Laser **dadurch gekennzeichnet ist, daß** er ein System gemäß einem der Ansprüche 1 bis 8 aufweist.

**Claims**

1. An optical amplifier system (20) for pulsed laser with short or ultrashort and energetic pulses, comprising:

   - an optical pumping source able to generate a pump wave (6),
   - an elongate amplifying medium (3) comprising an input interface (7) able to receive an optical signal (4) to be amplified, said medium (3) being able to amplify said optical signal (4) propagating along said amplifying medium and able to extract an amplified signal (5),
   - an optical system (10) able to couple the pump wave (6) in the amplifying medium (3) so as to pump said amplifying medium (3) longitudinally, **characterized in that**:

   - the amplifying medium (3) is rotationally symmetric, such as a doped fiber, and has a transverse dimension $\phi_3$ greater than 50 $\mu$m and smaller than 1000 $\mu$m,
   - the amplifying medium (3) is a gain medium able to guide said pump wave, said pump-guiding medium (3) having a minimum transverse dimension $\phi_3$ at the input interface (7),
   - the optical system (10) is able to focus the pump wave (6) inside the amplifying medium (3), said focused pump wave having at the focal point a transverse dimension $\phi_6$ smaller than the minimum transverse dimension $\phi_3$ and a numerical aperture smaller than the numerical aperture of the amplifying medium (3), in such a way that said pump wave propagates freely over a part (1) of the amplifying medium (3), and that said pump wave (6) propagates in a confined manner over a part (2) of the amplifying medium by total internal reflection inside the guiding gain medium (3).

2. A system according to claim 1, **characterized in that** the amplifying medium (3) is a solid medium doped with rare earth or metal ions.

3. A system according to claim 1, **characterized in that** the amplifying medium (3) comprises an elongated cell containing a gas able to amplify the optical signal (4) by optical pumping.

4. A system according to claim 1, **characterized in that** the amplifying medium (3) comprises an elongated cell containing a liquid comprising particles or molecules able to amplify the optical signal (4) by optical pumping.

5. A system according to one of the claims 1 to 4, **char-**

**acterized in that** the amplifying medium (3) comprises a core and a clad, the optical signal (4) to be amplified propagating in the core of the medium (3).

6. A system according to one of the claims 1 to 5, **characterized in that** the optical pumping source and the optical system (10) are able to focus the pump wave (6) in such a manner that said pump wave propagates freely over a length greater than 1 mm of the medium (3).

7. A system according to one of the claims 1 to 6, **characterized in that** it comprises a second optical pumping source able to generate a second pump wave (26, 36), able to optically pump the part (2) of the amplifying medium (3), transversally to the axis of propagation of the signal to be amplified or in a longitudinal and contra-propagative manner with respect to the axis of propagation of the signal to be amplified.

8. A system according to one of the claims 1 to 7, **characterized in that** the signal to be amplified performs no more than two passages in the amplifying medium (3).

9. A pulsed laser comprising an oscillator (14) able to emit pulses to be amplified, said laser being **characterized in that** it comprises an amplifier system according to one of the claims 1 to 8.

Figure 1

Figure 2

Figure 3

Figure 4

Figure 5

Figure 6

Figure 7

Sub-100 fs
100 μJ →1 mJ
@ 1050 nm
0.1-1 MHz

Figure 8

Figure 9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2006016276 A1
- WO 2007051138 A2

- WO 2006106276 A

**Littérature non-brevet citée dans la description**

- **K. SUEDA et al.** LD pumped Yb:YAG regenerative amplifier for high average power short-pulse generation. *Laser Physics Letters,* 2008, vol. 5, 271-275

- **SHIRADAN et al.** *Applied Optics,* 2007, vol. 46, 7552-7565
- **CHENG et al.** *Optics Letters,* 2005, vol. 30, 358-360